# EUROPEAN PATENT APPLICATION

(11) **EP 4 611 053 A1**
(43) Date of publication of application: **03.09.2025**
(21) Application number: 23929871.4
(22) Date of filing: 08.10.2023
(51) Int. Cl.: H01M 4/13

(54) **POSITIVE ELECTRODE SHEET AND PREPARATION METHOD THEREFOR, AND BATTERY AND ELECTRIC DEVICE**

(30) Priority: 29.03.2023 CN 202310322609
(71) Applicant: Contemporary Amperex Technology (Hong Kong) Limited, Hong Kong (HK)
(72) Inventor: XU, Xiaofu, Ningde, Fujian 352100 (CN)
(74) Representative: Jacob, Reuben Ellis
(86) International application number: PCT/CN2023/123424
(87) International publication number: WO 2024/198297

(57) **Abstract**

A positive electrode sheet and a preparation method therefor, and a battery and an electric device. The positive electrode sheet comprises a positive electrode current collector and a positive electrode active material layer, which is arranged on at least one side surface of the positive electrode current collector and comprises a positive electrode active material, wherein the positive electrode active material comprises a sodium-containing positive electrode active material. The thickness of the positive electrode sheet satisfies Dmax/Dmin being 104.5%-300%. After the positive electrode sheet and a negative electrode sheet are assembled into a battery, the thickness of the positive electrode sheet is Dmax when the battery is at 0% SOC, and the thickness of the positive electrode sheet is Dmin when the battery is at 100% SOC. The negative electrode sheet comprises a negative electrode current collector. When the battery is at 100% SOC, at least one side surface of the negative electrode current collector is provided with a sodium metal layer.

## Description

### TECHNICAL FIELD

This disclosure relates to the battery field, and specifically, to a positive electrode plate and a preparation method thereof, a battery, and an electric apparatus.

### BACKGROUND

As application of lithium-ion battery technologies expand in markets such as consumer electronics, electric vehicles, and energy storage, the issue of lithium resource scarcity becomes increasingly prominent. Sodium-based batteries are gaining attention due to abundance of the sodium element on earth, and are of significant strategic importance in cost-sensitive application fields such as energy storage. With advancements in electrolyte, electrolyte additive technologies, and surface modification technologies, the long-standing issue of sodium dendrite generation caused by uneven metal deposition on surfaces has been significantly alleviated. This has brought sodium metal negative electrode with a high energy density back into focus.

Therefore, the current positive electrode plate and preparation method thereof, batteries, and electric apparatus still need to be improved.

### SUMMARY

In one aspect of this application, this application provides a positive electrode plate, including a positive electrode current collector and a positive electrode active material layer. The positive electrode active material layer is disposed on a surface of at least one side of the positive electrode current collector. The positive electrode active material layer includes a positive electrode active material. The positive electrode active material includes a sodium-containing positive electrode active material. A thickness of the positive active plate satisfies that Dₘₐₓ/Dₘᵢₙ is 104.5% to 300%, where for a battery assembled from the positive electrode plate and a negative electrode plate, Dₘₐₓ is a thickness of the positive electrode plate of the battery at 0% SOC, and Dₘᵢₙ is a thickness of the positive electrode plate of the battery at 100% SOC. The negative electrode plate includes a negative electrode current collector, and when the battery is at 100% SOC, a surface of at least one side of the negative electrode current collector has a sodium metal layer. The positive electrode plate in this application can alleviate a stress change caused by a volume change of the negative electrode plate in a charge/discharge process, thereby reducing volume swelling of the battery during operation and enhancing structural stability of the battery.

According to this embodiment of this application, a porosity of the positive electrode active material layer is 25% to 50%. In this way, a porous structure of the positive electrode plate can alleviate the stress change caused by swelling and contraction of the negative electrode plate.

According to this embodiment of this application, the positive electrode active material includes a layered oxide, and the layered oxide satisfies a chemical formula NaₓM_{y}O₂, where 0<x≤4.5, 0<y≤1, the M element includes at least one of Ti, V, Cr, Fe, Cu, Zn, Sr, Y, Zr, Nb, Mo, Cd, Sn, Sb, Te, Ba, Ta, W, Yb, La, and Ce, and preferably, the M element includes at least one of Ti, V, Cr, Fe, Co, Mn, Ni, Cu, and Zn. In this way, manufacturing costs of the positive electrode plate can be reduced while an energy density of the positive electrode plate can be improved.

According to this embodiment of this application, the positive electrode active material includes a polyanionic compound, a cationic element of the polyanionic compound includes at least one of Ni, V, Co, Fe, Mn, and Cu, anions of the polyanionic compound include at least one of F⁻, PO₄³⁻, P₂O₇⁴⁻, and (PO₄)₂P₂O₇¹⁰⁻, and preferably, the anions of the polyanionic compound include F⁻. In this way, the manufacturing costs of the positive electrode plate can be reduced while the energy density of the positive electrode plate can be improved.

According to this embodiment of this application, the anions of the polyanionic compound include PO₄³⁻ and P₂O₇⁴⁻, a molar ratio of P₂O₇⁴⁻ to PO₄³⁻ in the polyanionic compound is 0.1 to 5, and preferably, the molar ratio of P₂O₇⁴⁻ to PO₄³⁻ in the polyanionic compound is 0.1 to 3. In this way, the manufacturing costs of the positive electrode plate can be further reduced while the energy density of the positive electrode plate can be improved.

According to this embodiment of this application, the positive electrode active material layer further includes a sodium supplement additive, a mass fraction of the positive electrode active material in the positive electrode active material layer is 50wt% to 98wt%, and a mass fraction of the sodium supplement additive in the positive electrode active material layer is 2wt% to 50wt%. In this way, the sodium supplement additive can increase the energy density of the battery. Further, a lithium supplement additive can compensate for sodium consumption that occurs during cycling, thereby improving cycling performance of the battery.

According to this embodiment of this application, the sodium supplement additive includes at least one of Na₂S, NaN₃, Na₂NiO₂, NaC₆H₅O₇, Na₂O, Na₂O₂, Na₆CoO₄, Na₅FeO₄, Na₂C₂O₄, Na₂C₄O₄, Na₂C₃O₅, Na₂C₄O₆, and Na₂C₆O₆. In this way, the energy density and cycling performance of the battery can be further improved.

According to this embodiment of this application, a thickness of the negative electrode plate satisfies that dₘₐₓ/dₘᵢₙ is 100% to 700%, where dₘₐₓ is a thickness of the negative electrode plate of the battery at 100% SOC, and dₘᵢₙ is a thickness of the negative electrode plate of the battery at 0% SOC. In this way, the foregoing positive electrode plate can be used for the negative electrode plate with a large thickness change rate in the battery.

In another aspect of this application, this application provides a preparation method of the foregoing positive electrode plate, including: providing a positive electrode current collector; and providing a positive electrode slurry, and applying the positive electrode slurry on a surface of at least one side of the positive electrode current collector, to form a positive electrode active material layer. In this case, this method has all the features and advantages of the foregoing positive electrode plate. Details are not described herein again.

According to this embodiment of this application, the providing a positive electrode slurry includes: uniformly mixing a positive electrode active material with a sodium supplement additive in a solvent; and after the positive electrode active material layer is formed, the method further includes: assembling the positive electrode plate and a negative electrode plate into a battery, and performing formation. In this way, the porosity of the positive electrode active material layer can be further improved.

According to this embodiment of this application, before the applying the positive electrode slurry on a surface of at least one side of the positive electrode current collector, the method further includes: providing a sodium foil on the surface of the positive electrode current collector on which the positive electrode slurry is applied. In this way, a positive electrode plate with a high energy density can be manufactured.

In still another aspect of this application, this application provides a battery, including a positive electrode plate, a negative electrode plate, and a separator between the positive electrode plate and the negative electrode plate, where the positive electrode plate is the positive electrode plate described above and/or a positive electrode plate prepared using the foregoing method; and the negative electrode plate includes a negative electrode current collector, and a thickness of the negative electrode plate satisfies that dₘₐₓ/dₘᵢₙ is 100% to 700%, where dₘₐₓ is a thickness of the negative electrode plate of the battery at 100% SOC, and dₘᵢₙ is a thickness of the negative electrode plate of the battery at 0% SOC. In this way, the battery has all the features and advantages of the forgoing positive electrode plate and the preparation method of the positive electrode plate. Details are not described herein again.

In yet another aspect of this application, this application provides an electric apparatus, including the foregoing positive electrode plate, and/or a positive electrode plate prepared using the foregoing method, and/or the foregoing battery. In this way, the electric apparatus has all the features and advantages of the forgoing positive electrode plate, the preparation method of the positive electrode plate, and the battery. Details are not described herein again.

### DESCRIPTION OF DRAWINGS

The above and/or additional aspects and advantages of this application become obvious and easy to understand from the description of the embodiments with reference to the following accompanying drawings.
FIG. 1 is a schematic structural diagram of a battery at 0% SOC according to an embodiment of this application;
FIG. 2 is a schematic structural diagram of a battery at 100% SOC according to an embodiment of this application;
FIG. 3 is a schematic structural diagram of a battery at 60% SOC according to an embodiment of this application;
FIG. 4 is a schematic diagram of a battery according to an embodiment of this application;
FIG. 5 is an exploded view of the battery according to the embodiment of this application in FIG. 4;
FIG. 6 is a schematic diagram of a battery module according to an embodiment of this application;
FIG. 7 is a schematic diagram of a battery pack according to an embodiment of this application;
FIG. 8 is an exploded view of the battery pack according to the embodiment of this application in FIG. 7; and
FIG. 9 is a schematic diagram of an electric apparatus using a battery as a power supply according to an embodiment of this application.

### Reference signs:

1. battery pack; 2. upper box body; 3. lower box body; 4. battery module; 5. battery; 11. negative electrode current collector; 12. sodium metal layer; 21. positive electrode current collector; 22. positive electrode active material layer; 30. separator; 40. electrolyte; 51. housing; 52. electrode assembly; and 53. top cover assembly.

### DESCRIPTION OF EMBODIMENTS

The embodiments of this application are described in detail below. Examples of the embodiments are shown in the accompanying drawings, and the same or similar reference signs indicate the same or similar components or components with the same or similar functions. The embodiments described below with reference to the accompanying drawings are illustrative and merely for explaining this application, and cannot be construed as any limitations on this application.

In the description of this application, SOC refers to state of charge of a battery, reflecting a remaining capacity of the battery. SOC is numerically defined as a proportion of the remaining capacity to a total capacity of the battery, usually expressed as a percentage within a range of 0% to 100%. "100% SOC" refers to a state in which the battery is charged at a constant current of 1C to the maximum design voltage, and then charged at a constant voltage until the current reaches 0.05C, including a left-standing state of the battery (usually the battery is left standing for 10 min). Both are considered as 100% SOC, that is, a fully charged state. "60% SOC" refers to a state in which an electrochemical apparatus is charged at a constant current to 60% state of charge. The following method can be used to adjust the battery to 60% SOC: first fully charging the battery, and then discharging the battery at a constant current of 1C for 12 min. At this point, the battery is at 60% SOC, including a left-standing state of the battery (usually the battery is left standing for 10 min). "0% SOC" refers to a state in which the remaining capacity of the battery is zero, that is, a fully discharged state.

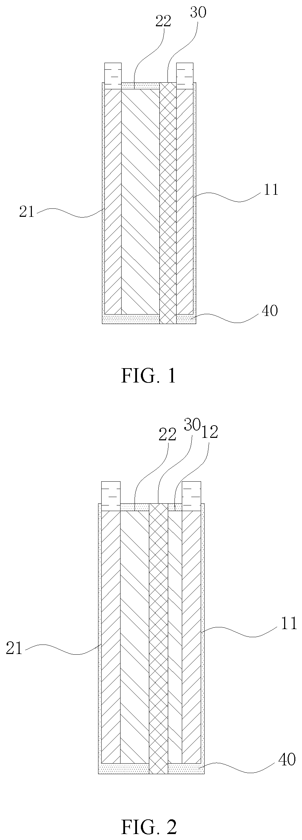

A sodium metal battery with "no negative electrode" is used as an example. With reference to FIG. 1 to FIG. 3, during charge of the battery, when the battery is in the fully discharged state, a negative electrode plate includes only a negative electrode current collector 11. As sodium ions in a positive electrode active material layer 22 gradually deintercalate and deposit on a surface of the negative electrode current collector 11 in the charge process, a sodium metal layer 12 is gradually formed on the surface of the negative electrode current collector 11, to be specific, a thickness of the negative electrode plate gradually increases, and the thickness of the negative electrode plate reaches a maximum value when the battery is fully charged. Further, when a volume of another structure other than the negative electrode plate in the battery remains unchanged, a utilization rate of an internal space of the battery increases as the thickness of the negative electrode plate increases in the charge process. Therefore, pressure exerted by the internal structure of the battery on a battery housing increases, eventually causing the battery housing to deform and fail to meet the requirement for surface flatness, thereby affecting assembly of a battery module, and also significantly enhancing fatigue strength of a functional component. In addition, significant volume swelling causes issues such as detachment and peeling of an adhesive layer between adjacent batteries, leading to structural damage of the battery module.

For the sodium metal battery with "no negative electrode", the maximum value of a thickness change of the negative electrode plate due to the sodium deposition or deintercalation on the surface of the negative electrode current collector can be several times an initial thickness value. Based on this, with use of a positive electrode plate with a thickness change pattern opposite to that of the negative electrode plate in the metal battery with "no negative electrode", a stress caused by swelling or contraction of the negative electrode plate can be effectively mitigated. Specifically, in this application, the positive electrode plate has a minimum thickness when the battery is in the fully charged state, and has a maximum thickness when the battery is in the fully discharged state. In addition, the thickness of the positive electrode plate gradually increases as the battery transitions from the fully charged state to the fully discharged state, and gradually decreases as the battery transitions from the fully discharged state to the fully charged state. Conversely, the negative electrode plate has a maximum thickness when the battery is in the fully charged state, and has a minimum thickness when the battery is in the fully discharged state. In addition, the thickness of the negative electrode plate gradually increases as the battery transitions from the fully discharged state to the fully charged state, and gradually decreases as the battery transitions from the fully charged state to the fully discharged state. In the charge process, in the metal battery with "no negative electrode" assembled from the positive electrode plate provided in this application, the thickness of the negative electrode plate continuously increases while the thickness of the positive electrode plate adaptively decreases. In the discharge process, the thickness of the negative electrode plate continuously decreases while the thickness of the positive electrode plate adaptively increases. In this way, complementary thickness adjustment between the electrode plates is achieved, effectively mitigating the volume change of the negative electrode plate in the charge/discharge process. Consequently, an internal stress of the battery remains stable throughout the charge/discharge process, significantly enhancing the structural stability of the battery, thereby prolonging a lifespan of the battery.

In the specification of this application, the metal battery with "no negative electrode" refers to a battery that does not incorporate a negative electrode active material in manufacturing, utilizing only a negative electrode current collector as the nominal negative electrode plate. However, the negative electrode current collector does not function as a negative electrode plate. Only when the charge process is completed can the battery possess a negative electrode plate in the true sense of the word after metal active ions from the positive electrode active material layer migrate to the surface of the negative electrode current collector and deposit on the surface of the negative electrode current collector to form the sodium metal layer.

In some embodiments, the sodium battery with "no negative electrode" refers to a battery that does not actively incorporate a negative electrode active material layer on the negative electrode plate side in manufacturing of the battery. For example, in manufacturing of the battery, the negative electrode current collector is not provided with the negative electrode active material layer through processes such as coating and deposition. During the first charge, sodium ions gain electrons on the negative electrode side and deposit on the surface of the negative electrode current collector in a form of metallic sodium to form a sodium metal phase. During discharge, the metallic sodium can be converted into sodium ions and return to the positive electrode plate, thus achieving cyclic charge and discharge. Compared with other sodium batteries, the sodium battery with "no negative electrode" can achieve a higher energy density due to the absence of the negative electrode active material layer.

For example, in the sodium battery with "no negative electrode", a functional coating can be disposed on the surface of the negative electrode current collector of the negative electrode plate. The functional coating can improve performance of the battery.

In some embodiments, to improve the performance of the battery, the negative electrode plate may include the negative electrode current collector and a functional coating disposed on at least one side of the negative electrode current collector. The functional coating may include a carbon material coating (such as conductive single-walled carbon nanotubes, conductive multi-walled carbon nanotubes, superconducting carbon, acetylene black, carbon black, Ketjen black, carbon dots, carbon nanotubes, graphene, carbon nanofiber, soft carbon, and hard carbon), a lithium-philic/sodium-philic metal composite coating, and the like.

In one aspect of this application, this application provides a positive electrode plate, including a positive electrode current collector and a positive electrode active material layer. The positive electrode active material layer is disposed on a surface of at least one side of the positive electrode current collector, and the positive electrode active material layer includes a positive electrode active material. The positive electrode active material includes a sodium-containing positive electrode active material. A thickness of the positive active plate satisfies that Dₘₐₓ/Dₘᵢₙ is 104.5% to 300%. For a battery assembled from the positive electrode plate and the negative electrode plate, Dₘₐₓ is a thickness of the positive electrode plate of the battery at 0% SOC, and Dₘᵢₙ is a thickness of the positive electrode plate of the battery at 100% SOC. The negative electrode plate includes a negative electrode current collector, and when the battery is at 100% SOC, a surface of at least one side of the negative electrode current collector has a sodium metal layer. When the thickness of the positive electrode plate satisfies that Dₘₐₓ/Dₘᵢₙ is greater than 300%, a volume change rate of the positive electrode active material layer is excessively large, causing the positive electrode active material layer to be easily pulverized in the charge/discharge process, which can lead to detachment from the surface of the positive electrode current collector. When the thickness of the positive electrode plate satisfies that Dₘₐₓ/Dₘᵢₙ is less than 4.5%, the volume change rate of the positive electrode active material layer is excessively small, and therefore the volume change of the negative electrode plate cannot be effectively mitigated. When the thickness of the positive electrode plate satisfies that Dₘₐₓ/Dₘᵢₙ is 104.5% to 300%, the positive electrode plate can effectively mitigate a swelling stress caused by the volume change of the negative electrode plate in the charge/discharge process of the battery. This significantly improves the structural stability of the battery, thereby prolonging the lifespan of the battery.

According to some embodiments of this application, when the positive electrode plate has a porous structure, for example, when the positive electrode active material layer has a porous structure, the porous structure provides a compressible space for the positive electrode active material layer, where the compressible space can rebound after an external force is removed. When an external force is applied to the positive electrode active material layer, the positive electrode active material layer can be compressed, reducing the thickness of the positive electrode active material layer, thereby reducing the overall thickness of the positive electrode plate. Thus, the thickness of the positive electrode plate can be reduced when the negative electrode plate exerts a pressing force during charge, thereby mitigating the swelling stress generated by the negative electrode plate during charge. For example, a porosity of the positive electrode active material layer may be 25% to 50%. When the porosity of the positive electrode active material layer is less than 25%, compressibility of the positive electrode active material layer is poor, so the swelling stress of the negative electrode plate cannot be effectively mitigated. When the porosity of the positive electrode active material layer is greater than 50%, the positive electrode active material layer has excessive pores with excessively large pore diameters, leading to poor contact between particles of the positive electrode active material. This results in deterioration of performance of the positive electrode plate caused by increased contact resistance, and also leads to issues such as a lower energy density of the positive electrode plate.

The porosity of the positive electrode active material layer can be determined by using a gas displacement method. The porosity of the positive electrode active material layer is a percentage of a pore volume in the positive electrode active material layer relative to a total volume of the positive electrode active material layer. Specifically, according to some embodiments of this application, the porosity can be determined with reference to GB/T 24586-2009 through the following steps. The positive electrode plate is immersed in ethyl methyl carbonate (EMC) for cleaning, and measurement is performed with an AccuPyc II 1340 device by using the gas displacement method. A calculation formula is as follows: a porosity of the positive electrode plate ρₒᵥₑᵣₐₗₗ=(V-V₀)/Vₒᵥₑᵣₐₗₗ*100%, where V₀ is a true volume and V is an apparent volume; and a porosity of the positive electrode active material layer ρ=ρₒᵥₑᵣₐₗₗ*V/(V-V_{current} collector), where V_{current collector} is a volume of the current collector.

According to some embodiments of this application, the positive electrode active material may include a layered oxide, where the layered oxide may satisfy the chemical formula NaₓM_{y}O₂, where 0<x≤4.5, 0<y≤1, and the M element includes at least one of Ti, V, Cr, Fe, Cu, Zn, Sr, Y, Zr, Nb, Mo, Cd, Sn, Sb, Te, Ba, Ta, W, Yb, La, and Ce. According to some other embodiments of this application, the M element includes at least one of Ti, V, Cr, Fe, Co, Mn, Ni, Cu, and Zn. A crystal structure of a sodium-containing layered oxide is similar to that of a ternary positive electrode material. The sodium-containing layered oxide has a high energy density, high compacted density, and good cycling performance. In addition, metals included in the layered oxide, such as copper, manganese, and iron, are abundant and relatively inexpensive. This further reduces manufacturing costs of the battery.

According to some embodiments of this application, the positive electrode active material may include a polyanionic compound. A cationic element of the polyanionic compound may include at least one of Ni, V, Co, Fe, Mn, and Cu. According to some other embodiments of this application, cations of the polyanionic compound may include at least one of Ni²⁺, Ni³⁺, Co²⁺, Co³⁺, Fe²⁺, Fe³⁺, Mn³⁺, V³⁺, and Cu²⁺; and anions of the polyanionic compound include at least one of F⁻, PO₄³⁻, P₂O₇⁴⁻, and (PO₄)₂P₂O₇¹⁰⁻. According to some other embodiments of this application, the anions of the polyanionic compound include F⁻. A crystal structure of the polyanionic compound is mainly an olivine structure. The polyanionic compound has a long cycle life, high output voltage, and good structural stability. During intercalation and deintercalation of sodium ions, the polyanionic compound undergoes a small volume change and few phase transitions, bringing about good long-term cycling stability.

According to some embodiments of this application, when the anions of the polyanionic compound include PO₄³⁻ and P₂O₇⁴⁻, a molar ratio of P₂O₇⁴⁻ to PO₄³⁻ in the polyanionic compound may be 0.1 to 5. According to some other embodiments of this application, the molar ratio of P₂O₇⁴⁻ to PO₄³⁻ in the polyanionic compound may be 0.1 to 3. When the molar ratio of P₂O₇⁴⁻ to PO₄³⁻ in the polyanionic compound is 0.1 to 5, the polyanionic compound has a high specific capacity and good cycling performance.

According to some embodiments of this application, the positive electrode active material layer may further include a sodium supplement additive. A mass fraction of the positive electrode active material in the positive electrode active material layer may be 50wt% to 98wt%, and a mass fraction of the sodium supplement additive in the positive electrode active material layer may be 2wt% to 50wt%. In this application, the sodium supplement additive can compensate for a loss of active sodium during formation of an SEI in the first charge/discharge process of the battery, ensuring sufficient reversible active sodium for subsequent cycles of the battery, thus increasing the energy density of the battery. The sodium supplement additive can also compensate for sodium consumption during cycling, improving cycling performance of the battery. According to some other embodiments of this application, when a sodium-free and/or low-sodium positive electrode active material is used, an amount of the sodium supplement additive may be appropriately increased to ensure that the energy density of the positive electrode plate meets a design requirement of the battery. When a conventional sodium-containing positive electrode active material is used, the amount of the sodium supplement additive may be appropriately reduced to ensure that the energy density of the positive electrode plate meets the design requirement of the battery. Persons skilled in the art can make selections based on actual conditions.

According to some embodiments of this application, when the volatile sodium supplement additive is used, gas can be generated during formation of the battery and released from the positive electrode active material layer, further providing a porous structure for the positive electrode active material layer to increase the porosity of the positive electrode active material layer. For example, the sodium supplement additive may include at least one of Na₂S, NaN₃, Na₂NiO₂, NaC₆H₅O₇, Na₂O, Na₂O₂, Na₆CoO₄, Na₅FeO₄, Na₂C₂O₄, Na₂C₄O₄, Na₂C₃O₅, Na₂C₄O₆, and Na₂C₆O₆.

According to some embodiments of this application, the thickness of the positive electrode current collector is 5 µm to 60 µm, and the thickness of the positive electrode active material layer is 50 µm to 350 µm. When the thicknesses of the positive electrode current collector and the positive electrode active material layer fall within the foregoing ranges, and the porosity of the positive electrode active material layer is 25% to 50%, the thickness change of the positive electrode plate in the charge/discharge process may satisfy that Dₘₐₓ/Dₘᵢₙ is 104.5% to 300%.

According to some embodiments of this application, the positive electrode active material layer of the positive electrode plate in this application can be compressed and rebound. Therefore, when the thickness of the negative electrode plate increases during charge, the thickness of the positive electrode plate can adaptively decrease; and when the thickness of the negative electrode plate decreases during discharge, the thickness of the positive electrode plate can adaptively increase. This can ensure that the internal stress of the battery remains stable throughout the charge/discharge process. When the thickness of the positive electrode plate satisfies that Dₘₐₓ/Dₘᵢₙ is 104.5% to 300%, part of space is reserved in a battery housing in structural design, where the reserved space may be used to alleviate the stress generated due to the volume swelling of the battery in the charge/discharge process. Specifically, in an initial stage of swelling of the negative electrode plate, the reserved space of the battery housing may be used to alleviate the relatively mild volume swelling of the negative electrode plate. As the volume of the negative electrode plate further swells, the positive electrode plate can correspondingly contract in volume under the pressure from the negative electrode plate side, thus further alleviating the pressure caused by the volume swelling of the negative electrode plate. Through the joint action of the reserved space in the battery housing and the compressible and reboundable positive electrode plate, the stress caused by the negative electrode plate with a large volume change rate in the charge/discharge process can be alleviated. For example, the swelling and contraction changes of the negative electrode plate with a thickness satisfying that dₘₐₓ/dₘᵢₙ is 100% to 700% can be alleviated in the charge/discharge process (dₘₐₓ is a thickness of the negative electrode plate of the battery at 100% SOC, and dₘᵢₙ is a thickness of the negative electrode plate of the battery at 0% SOC). According to some other embodiments of this application, the thickness of the negative electrode plate satisfies that dₘₐₓ/dₘᵢₙ may be 120% to 400%.

According to some embodiments of this application, the thickness of the negative electrode current collector may be 5 µm to 600 µm, and the thickness of the sodium metal layer on the surface of the negative electrode current collector may be 0 µm to 200 µm. When the thicknesses of the negative electrode current collector and the sodium metal layer fall within the above ranges, a thickness change of the negative electrode plate in the charge/discharge process may satisfy that dₘₐₓ/dₘᵢₙ is 100% to 700%.

It should be noted that for the metal battery with "no negative electrode", when the battery is at 100% SOC, the metal layer is formed through deposition on the surface of the negative electrode current collector, and when the battery is at 0% SOC, the metal layer on the surface of the negative electrode current collector theoretically disappears completely. However, in practice, at a low SOC, such as 0% SOC, the negative electrode current collector may still have a small amount of irregularly deposited metal, where the residual deposited metal is thin, with ignorable impact on the thickness of the negative electrode plate.

According to some embodiments of this application, for a negative electrode plate that incorporates a negative electrode active material in manufacturing and that has a negative electrode current collector with a surface provided with a negative electrode active material layer, for example, a sodium-ion battery, in a charge/discharge process of the negative electrode plate, the negative electrode plate undergoes volume swelling and contraction in the charge/discharge process due to generation of sodium dendrites on the surface of the negative electrode active material layer, intercalation reaction of sodium ions in the negative electrode active material layer, alloy reactions involving sodium ions, swelling of silicon-containing negative electrode active material in the negative electrode active material layer, and the like. The positive electrode plate in this application is also applicable to a battery with the negative electrode plate described above, effectively alleviating the stress change caused by the volume change of the negative electrode plate.

It can be understood that the positive electrode plate in this application is also applicable to lithium-ion battery systems. Persons skilled in the art can make corresponding adjustments to types of positive electrode active materials, negative electrode current collectors, and the like based on actual conditions. Details are not described herein again.

In another aspect of this application, this application provides a preparation method of the foregoing positive electrode plate, including: providing a positive electrode current collector; and providing a positive electrode slurry, and applying the positive electrode slurry on a surface of at least one side of the positive electrode current collector, to form a positive electrode active material layer. In this case, this method has all the features and advantages of the foregoing positive electrode plate. Details are not described herein again.

According to some embodiments of this application, a positive electrode plate that meets the foregoing porosity requirement can be obtained according to a chemical method. Specifically, the providing a positive electrode slurry may include: uniformly mixing a positive electrode active material with a sodium supplement additive in a solvent; and after the positive electrode active material layer is formed, the method may further include: assembling the positive electrode plate and a negative electrode plate into a battery, and performing formation. In this step, a volatile residual-free sodium supplement additive or a semi-residual sodium supplement additive is uniformly mixed with the positive electrode active material. During the formation of the battery, the sodium supplement additive reacts and releases gas, leaving a porous structure in the positive electrode active material layer, to further improve a porosity of the positive electrode active material layer. When a sodium-free positive electrode active material and/or low-sodium positive electrode active material is used, an amount of the sodium supplement additive may be appropriately increased to ensure that an energy density of the positive electrode plate meets a design requirement of the battery. When a conventional sodium-containing positive electrode active material is used, the amount of the sodium supplement additive may be appropriately decreased to ensure that the energy density of the positive electrode plate meets the design requirement of the battery. Persons skilled in the art can make selections based on actual conditions.

It should be noted that, for types of substances of the positive electrode active material and the sodium supplement additive and related parameters, reference can be made to some or all of the technical features in the foregoing embodiments. For parts not described in this embodiment, reference can also be made to the foregoing embodiments and related drawings. Details are not described herein again.

According to some embodiments of this application, before the applying the positive electrode slurry on a surface of at least one side of the positive electrode current collector, the method further includes: providing a sodium foil on the surface of the positive electrode current collector on which the positive electrode slurry is applied. In this case, the sodium foil is disposed to further enhance sodium supplement for the positive electrode plate.

According to some embodiments of this application, a positive electrode plate satisfying the foregoing porosity requirement can be obtained according to a physical method. Specifically, cold pressing is performed on the positive electrode plate under a press roller; secondary slitting is performed on the cold-pressed positive electrode plate; the positive electrode plate is pressed with a perforating roller before winding and insertion; and perforating pins with different lengths are provided on the perforating roller to adjust the porosity of the positive electrode active material layer, increasing the porosity of the positive electrode active material layer and reducing costs of battery manufacturing. According to some embodiments of this application, the perforating roller may include a roller body and perforating pins distributed on a surface of the roller body. The perforating pins include at least one row of first perforating pins and at least one row of second perforating pins. Each row of first perforating pins is arranged adjacent to each row of second perforating pins. A length of the first perforating pin is greater than a length of the second perforating pin. The length of the first perforating pin is 80% to 90% of a thickness of the active material layer, and the length of the second perforating pin is 40% to 60% of the thickness of the active material layer. An arrangement density of the second perforating pins is 100% to 200% of an arrangement density of the first perforating pins. A diameter of the perforating pin is 100 µm to 800 µm. A distance between two adjacent rows of first perforating pins is 1 to 2 times the length of the first perforating pin. Specifically, a row of first perforating pins is arranged between two adjacent rows of second perforating pins. The distance between two adjacent rows of first perforating pins is 1.5 times the length of the first perforating pin, and a distance between two adjacent rows of second perforating pins is 1.5 times the length of the first perforating pin. The length of the first perforating pin is 85% of the thickness of the positive electrode active material layer, and the diameter is 550 µm. The length of the second perforating pin is 50% of the thickness of the positive electrode active material layer, and the diameter is 550 µm. The arrangement density of the second perforating pins is 150% of the arrangement density of the first perforating pins. In this way, a positive electrode active material layer with a porosity within the foregoing range can be obtained.

In still another aspect of this application, this application provides a battery, including a positive electrode plate, a negative electrode plate, and a separator between the positive electrode plate and the negative electrode plate. The positive electrode plate is the positive electrode plate described above and/or a positive electrode plate prepared using the foregoing method. The negative electrode plate includes a negative electrode current collector, and a thickness of the negative electrode plate satisfies that dₘₐₓ/dₘᵢₙ is 100% to 700%, where dₘₐₓ is a thickness of the negative electrode plate of the battery at 100% SOC, and dₘᵢₙ is a thickness of the negative electrode plate of the battery at 0% SOC. According to some other embodiments of this application, the thickness of the negative electrode plate satisfies that dₘₐₓ/dₘᵢₙ is 120% to 400%. In this case, the battery has an appropriate volume change rate in the charge/discharge process, achieving high structural stability.

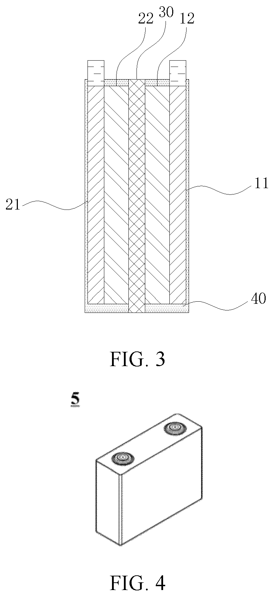

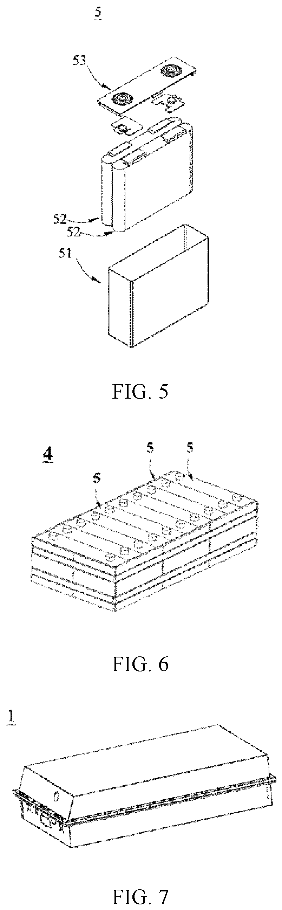

According to some embodiments of this application, the battery is not limited to any particular shape in this embodiment of this application, and may be cylindrical, rectangular, or of any other shapes. FIG. 4 shows a rectangular battery 5 as an example. Specifically, refer to FIG. 5. An outer package may include a housing 51 and a top cover assembly 53. The housing 51 may include a base plate and side plates connected to the base plate, and the base plate and the side plates enclose an accommodating cavity. The housing 51 has an opening communicating with the accommodating cavity, and the top cover assembly 53 can cover the opening to seal the accommodating cavity. The positive electrode plate, the negative electrode plate, and the separator may be made into an electrode assembly 52 through winding or lamination. The electrode assembly 52 is enclosed in the accommodating cavity. An electrolyte infiltrates the electrode assembly 52. The battery 5 may include one or more electrode assemblies 52, and persons skilled in the art may make selections based on actual requirements.

According to some embodiments of this application, the battery may include an outer package. The outer package is used for packaging a positive electrode plate, a negative electrode plate, and an electrolytic salt.

According to some embodiments of this application, the outer package may include a housing and a cover plate. The housing may include a base plate and side plates connected to the base plate, and the base plate and the side plates enclose an accommodating cavity. The housing has an opening communicating with the accommodating cavity, and the cover plate can cover the opening to seal the accommodating cavity. A positive electrode plate, a negative electrode plate, and a separator may be made into an electrode assembly through winding or lamination. The electrode assembly is packaged in the accommodating cavity. The electrolytic salt may be an electrolyte, and the electrolyte infiltrates the electrode assembly. There may be one or more electrode assemblies in the battery, and the quantity may be adjusted based on requirements.

According to some embodiments of this application, the outer package of the battery may be a hard shell, for example, a hard plastic shell, an aluminum shell, or a steel shell. The outer package of the battery may alternatively be a soft pack, for example, a soft pouch. A material of the soft package may be plastic, for example, may include one or more of polypropylene (PP), polybutylene terephthalate (PBT), and polybutylene succinate (PBS).

In some embodiments of this application, batteries may be assembled into a battery module, and the battery module may include a plurality of batteries. A specific quantity may be adjusted based on application and a capacity of the battery module. Refer to FIG. 6. In the battery module 4, a plurality of batteries 5 may be sequentially arranged in a length direction of the battery module 4. Certainly, a different arrangement may be used. Further, the plurality of batteries 5 may be fastened through fasteners. The battery module 4 may further include a shell with an accommodating space, and the plurality of batteries 5 are accommodated in the accommodating space. The battery module 4 may further include a shell with an accommodating space, and the plurality of secondary batteries 5 are accommodated in the accommodating space. In some embodiments, the battery module may be further assembled into a battery pack, and a quantity of battery modules included in the battery pack may be adjusted based on application and capacity of the battery pack.

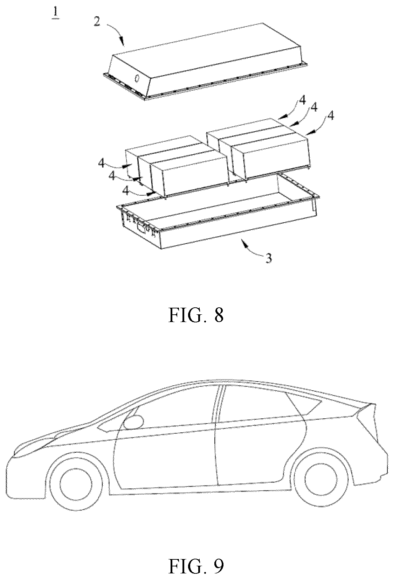

In some embodiments of this application, the battery module may be further assembled into a battery pack, and the battery pack may include one or more battery modules. The specific quantity may be chosen by persons skilled in the art according to application and a capacity of the battery pack. FIG. 7 and FIG. 8 show a battery pack 1 as an example. Refer to FIG. 7 and FIG. 8. The battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In still another aspect of this application, this application provides an electric apparatus. The electric apparatus includes the foregoing positive electrode plate, and/or a positive electrode plate prepared using the foregoing method, and/or the foregoing battery, where the battery is configured to provide electrical energy. Specifically, the battery, the battery module, or the battery pack may be used as a power supply for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, or the like, but is not limited thereto. The battery, the battery module, or the battery pack may be selected for the electric apparatus based on requirements for using the electric apparatus.

According to some embodiments of this application, FIG. 9 shows an electric apparatus as an example. This electric apparatus is a battery electric vehicle, a hybrid electric vehicle, a plug-in hybrid electric vehicle, or the like. To satisfy requirements of the electric apparatus for a high power and a high energy density of the battery, a battery pack or a battery module may be used.

In some embodiments of this application, the electric apparatus may alternatively be a mobile phone, a tablet computer, a notebook computer, or the like. Such apparatus is generally required to be light and thin and may use a battery as a power supply.

In this application, whether or not the terms "about" or "approximately" are used, all numerical values disclosed herein are understood as approximate values. Each numerical value may vary by less than 10% or by a difference considered as appropriate by persons skilled in the art, such as differences of 1%, 2%, 3%, 4%, or 5%.

In the descriptions of this application, it should be noted that orientations or positional relationships indicated by the terms "thickness", "upper", and the like are based on the orientations or positional relationships shown in the accompanying drawings. These terms are merely for ease and brevity of description of this application rather than indicating or implying that the apparatuses or components mentioned must have specific orientations or must be constructed or manipulated according to specific orientations, and therefore shall not be construed as any limitations on this application.

The solutions of this application are described below with reference to specific examples. However, it should be noted that the following examples are merely intended to illustrate this application but not to limit the scope of this application. Examples whose technical solutions or conditions are not specified are made in accordance with technical solutions or conditions described in literature in the field, or made in accordance with product instructions. The reagents or instruments used are all conventional products that are commercially available if no manufacturer is indicated.

### Example 1

### Preparation of positive electrode plate

A positive electrode active material Na₃V₂(PO₄)₃, sodium supplement additive Na₂C₂O₄, conductive agent acetylene black, and binder polyvinylidene fluoride (PVDF) were dissolved in a solvent N-methylpyrrolidone (NMP) at a weight ratio of 93:0:5:2. A positive electrode slurry was prepared through stirring and mixing to uniformity. A solvent ratio was adjusted to control a viscosity of the positive electrode slurry within 2,000 mPa·S to 5,000 mPa·S.

The positive electrode slurry was uniformly applied to an aluminum foil of a positive electrode current collector with a thickness of 60 µm. A positive electrode plate was obtained through drying, cold pressing, and cutting. A coating surface density was controlled according to the following corresponding examples.

### Preparation of negative electrode plate

A conductive carbon nanotube dispersion (conductive carbon amount: 2wt%) and thickener sodium carboxymethyl cellulose (CMC-Na) were mixed and stirred thoroughly to uniformity in an appropriate amount of deionized water solvent system at a weight ratio of 95:5. A viscosity of a negative electrode slurry was controlled within 2,000 mPa·S to 8,000 mPa·S. The slurry was then applied to a copper foil of 60 µm and dried, to obtain a negative electrode plate with functional coatings on surfaces of both sides of the negative electrode current collector.

### Preparation of battery

The positive electrode plate, a separator, and a negative electrode plate were stacked in sequence, with the separator placed between the positive electrode and negative electrode for separation. Winding was performed to form an electrode assembly. The electrode assembly was placed into a designed battery housing. An electrolyte was added to the battery housing. The electrolyte was left standing for 12 h for formation processing. During the formation, negative pressure degassing was performed simultaneously. The battery was obtained after packaging.

Examples 2 to 8 and Comparative examples 1 to 4 followed the same procedures as Example 1. For specific differences, refer to Table 1.

In Examples 1 to 8 and Comparative examples 1 to 4, the following performance tests were conducted on a battery. The test methods are as follows.
1. Porosity of a positive electrode active material layer: The porosity can be determined with reference to GB/T 24586-2009 through the following steps. The positive electrode plate was immersed in ethyl methyl carbonate (EMC) for cleaning, and measurement was performed with an AccuPyc II 1340 device by using the gas displacement method. A calculation formula was as follows: a porosity of the positive electrode plate ρₒᵥₑᵣₐₗₗ=(V-V₀)/Vₒᵥₑᵣₐₗₗ*100%, where V₀ was a true volume and V is an apparent volume; and the porosity of the positive electrode active material layer ρ=ρₒᵥₐₗₗ*V/(V-V_{current collector}), where V_{current collector} was a volume of the current collector. Refer to Table 1 for test results.
2. Thickness of the positive electrode plate: Dₘₐₓ test included: When the battery was at 0% SOC and the battery was disassembled, the thickness of the positive electrode plate was measured with a micrometer; and Dₘᵢₙ test included: When the battery was at 100% SOC and the battery was disassembled, the thickness of the positive electrode plate was measured with a micrometer. 100% SOC meant that the battery was charged at 1C to 4.3 V with a voltage of 2.5 V to 4.3 V in a constant temperature environment of 25°C. Then the battery was charged at a constant voltage of 4.3 V until the current was less than or equal to 0.05 mA. At this time, the battery was at 100% SOC. 0% SOC meant that the battery was discharged at 1C to 0% SOC as much as possible, and further discharged at 0.04C to a target voltage. After a battery cell was disassembled, an area of metal deposition on the surface of the negative electrode current collector was not greater than 5% of a total area of the disassembled negative electrode current collector. At this time, the battery was at 0% SOC. Refer to Table 2 for test results.
3. Thickness of the negative electrode plate: dₘₐₓ test included: When the battery was at 100% SOC and the battery was disassembled, the thickness of the negative electrode plate was measured with a micrometer; and dₘᵢₙ test included: When the battery was at 0% SOC and the battery was disassembled, the thickness of the negative electrode plate was measured with a micrometer. Refer to Table 2 for test results.
4. Cycle life of battery: The battery was charged at 1C to 4.3 V with a voltage of 1.5 V to 3.6 V in a constant temperature environment of 25°C. Then the battery was charged at a constant voltage of 4.3 V until the current was less than or equal to 0.05 mA. The battery was left standing for 5 min and was discharged to 2.5 V at 1C, and a discharge capacity at this time was recorded as D₀. The charge/discharge cycling was repeated until the discharge capacity was reduced to 80% of D₀. The number of cycles of the battery corresponding to this point was recorded, that is, the 80% SOH (State of Health) cycle life. Refer to Table 2 for test results.
5. Cycling swelling pressure of battery: A cell for test was placed in a test fixture, where the fixture was formed by three plates. The plates may be steel or aluminum. The three plates, the cell, and a sensor were disposed in a sequence of "plate/cell/plate sensor/plate". A distance between the plates and an appropriate initial fixture force were adjusted (a surface pressure was calculated based on a stressed area of the cell, where P=F/S). During cycling, the sensor transmitted corresponding specific swelling force data. A maximum swelling force during each cycle was recorded. The pressure was calculated to determine the number of cycles corresponding to 1 MPa as a cutoff condition. Refer to Table 2 for test results.
6. Compacted density of positive electrode plate: The compacted density was determined by measuring a mass of the positive electrode plate per unit area (g/cm²) and the thickness of the positive electrode plate (cm) (with more than 14 sampling points), where compacted density=mass of positive electrode plate per unit area (g/cm²)/thickness of positive electrode plate (cm). Refer to Table 1 for test results.

**Table 1**

| Number | Positive electrode active material layer | | | | Compacted density of positive electrode plate (g/cm³) |
|---|---|---|---|---|---|
| | Porosity (%) | Positive electrode active material | Mass fraction of positive electrode active material (wt%) | Mass fraction of sodium supplement additive (wt%) | |
| Example 1 | 35 | Na₃V₂(PO₄)₃ | 93 | 0 | 2.2 |
| Example 2 | 40 | Na₃V₂(PO₄)₃ | 88.4 | 5 | 2.2 |
| Example 3 | 45 | Na₃V₂(PO₄)₃ | 83.7 | 10 | 2.2 |
| Example 4 | 50 | Na₃V₂(PO₄)₃ | 79.1 | 15 | 2.2 |
| Example 5 | 60 | Na₃V₂(PO₄)₃ | 65.1 | 30 | 2.2 |
| Example 6 | 30 | Na_{0.92}[Ni_{0.4}Fe_{0.2}Mn_{0.4}]O₂ | 93 | 0 | 3 |
| Example 7 | 30 | Na₂S | 60 | 0 | 3 |
| Example 8 | 30 | Na₂S | 40 | 0 | 3 |
| Comparative example 1 | 35 | Na₃V₂(PO₄)₃ | 93 | 0 | 1.8 |
| Comparative example 2 | 35 | Na₃V₂(PO₄)₃ | 93 | 0 | 2.4 |
| Comparative example 3 | 70 | Na₃V₂(PO₄)₃ | 55.8 | 40 | 2.2 |
| Comparative example 4 | 30 | Na₂S | 30 | 0 | 3 |

**Table 2**

| Number | Positive electrode plate | | Negative electrode plate | | Dₘₐₓ /Dₘᵢₙ | dₘₐₓ /dₘᵢₙ | 80% SOH cycles (cycle) | Cycles corresponding to a swelling pressure ≥ 1 MPa (cycle) |
|---|---|---|---|---|---|---|---|---|
| | Dₘₐₓ (µm) | Dₘᵢₙ (µm) | dₘₐₓ (µm) | dₘᵢₙ (µm) | | | | |
| Example 1 | 180 | 172 | 93 | 70 | 104.5 | 132.9 | 409 | 357 |
| Example 2 | 180 | 169 | 93 | 70 | 106.8 | 132.4 | 802 | 728 |
| Example 3 | 180 | 163 | 93 | 70 | 110.7 | 131.2 | 1181 | 1132 |
| Example 4 | 180 | 157 | 92 | 70 | 114.9 | 129.1 | 819 | 784 |
| Example 5 | 181 | 145 | 89 | 71 | 124.6 | 113.4 | 510 | 425 |
| Example 6 | 130 | 117 | 110 | 70 | 111.1 | 157.1 | 791 | 806 |
| Example 7 | 130 | 65 | 106 | 70 | 200.0 | 151.4 | 560 | 789 |
| Example 8 | 130 | 46 | 106 | 70 | 285.7 | 151.4 | 425 | 536 |
| Comparative example 1 | 220 | 220 | 93 | 70 | 100.0 | 132.9 | 391 | 341 |
| Comparative example 2 | 180 | 188 | 93 | 70 | 95.7 | 132.9 | 314 | 287 |
| Comparative example 3 | 180 | 180 | 86 | 70 | 100.0 | 103.0 | 215 | 345 |
| Comparative example 4 | 130 | 39 | 106 | 70 | 333.3 | 151.4 | 309 | 311 |

The test results indicate that the thickness of the positive electrode plate in Examples 1 to 8 satisfies that Dₘₐₓ/Dₘᵢₙ is 104.5% to 300%, and the values of 80% SOH cycles of the battery in Examples 1 to 8 are higher than the values of 80% SOH cycles of the battery in Comparative examples 1 to 4. This indicates that use of a battery assembled from the positive electrode plate with a thickness satisfying that Dₘₐₓ/Dₘᵢₙ is 104.5% to 300% can achieve complementary thickness adjustment between the positive electrode plate and the negative electrode plate, effectively mitigating the volume change of the negative electrode plate in the charge/discharge process, and further extending the cycle life of the battery.

The thickness of the positive electrode plate in Examples 1 to 8 satisfies that Dₘₐₓ/Dₘᵢₙ is 104.5% to 300%. The values of cycles corresponding to a swelling pressure of the battery greater than or equal to 1 MPa in Examples 1 to 8 are all higher than the values of cycles corresponding to a swelling pressure of the battery greater than or equal to 1 MPa in Comparative examples 1 to 4. This indicates that use of the battery assembled from the positive electrode plate with a thickness satisfying that Dₘₐₓ/Dₘᵢₙ is 104.5% to 300% can achieve higher surface flatness of the battery, ensuring that the internal stress of the battery remains stable throughout the charge/discharge process. This can significantly improve structural stability of the battery.

In Examples 7 and 8, a sulfide positive electrode active material is used in the positive electrode active material, effectively increasing a volume change rate of the positive electrode plate, thereby significantly enhancing a swelling tolerance capability of the battery. The porosity of the positive electrode active material layer in Comparative example 3 is excessively high. This results in poor structural stability of the positive electrode plate, leading to poor structural stability of the battery and significant decline in the cycling performance.

In the description of this application, "A and/or B" can include any one of the following cases: A alone, B alone, or both A and B. Herein, A and B are merely examples and can represent any technical features connected by "and/or" in this application.

Unless otherwise stated, all technical and scientific terms used in this application have the same meanings as those commonly understood by persons of ordinary skills in the art to which this application pertains. All patents and publications referenced in this application are incorporated herein by reference in their entirety. The terms "comprising" or "including" are open-ended expressions, in other words, the content explicitly mentioned in this application is included, and other content are not excluded.

In the description of this specification, the terms "an embodiment", "another embodiment", and the like mean that a specific feature, structure, material or characteristic described with reference to the embodiment is included in at least one embodiment of this application. In this specification, the illustrative expressions of these terms do not necessarily refer to the same embodiment or example. In addition, the specific feature, structure, material or characteristic described can be combined in any appropriate manner in any one or more embodiments or examples. Besides, without mutual conflict, persons skilled in the art can incorporate and combine different embodiments or examples and features of the different embodiments or examples described in this specification. In addition, it should be noted that, in this specification, the terms "first" and "second" are merely for the purpose of description, and shall not be understood as any indication or implication of relative importance or any implicit indication of the number of technical features indicated.

Although the embodiments of this application have been shown and described, it is understood that these embodiments are illustrative and shall not be construed as limitations on this application. Persons of ordinary skill in the art can make changes, modifications, substitutions, and transformations to the embodiments within the scope of this application.

## Claims

1. A positive electrode plate, comprising:
a positive electrode current collector; and
a positive electrode active material layer, wherein the positive electrode active material layer is disposed on a surface of at least one side of the positive electrode current collector, the positive electrode active material layer comprises a positive electrode active material, and the positive electrode active material comprises a sodium-containing positive electrode active material; and
a thickness of the positive active plate satisfies that Dₘₐₓ/Dₘᵢₙ is 104.5% to 300%, wherein for a battery assembled from the positive electrode plate and a negative electrode plate, Dₘₐₓ is a thickness of the positive electrode plate of the battery at 0% SOC, and Dₘᵢₙ is a thickness of the positive electrode plate of the battery at 100% SOC;
wherein the negative electrode plate comprises a negative electrode current collector, and when the battery is at 100% SOC, a surface of at least one side of the negative electrode current collector has a sodium metal layer.

2. The positive electrode plate according to claim 1, wherein a porosity of the positive electrode active material layer is 25% to 50%.

3. The positive electrode plate according to claim 1 or 2, wherein the positive electrode active material comprises a layered oxide, and the layered oxide satisfies a chemical formula NaₓM_{y}O₂, wherein 0<x≤4.5, 0<y≤1, the M element comprises at least one of Ti, V, Cr, Fe, Cu, Zn, Sr, Y, Zr, Nb, Mo, Cd, Sn, Sb, Te, Ba, Ta, W, Yb, La, and Ce, and preferably, the M element comprises at least one of Ti, V, Cr, Fe, Co, Mn, Ni, Cu, and Zn.

4. The positive electrode plate according to claim 1 or 2, wherein the positive electrode active material comprises a polyanionic compound, a cationic element of the polyanionic compound comprises at least one of Ni, V, Co, Fe, Mn, and Cu, anions of the polyanionic compound comprise at least one of F⁻, PO₄³⁻, P₂O₇⁴⁻, and (PO₄)₂P₂O₇¹⁰⁻, and preferably, the anions of the polyanionic compound comprise F⁻.

5. The positive electrode plate according to claim 4, wherein the anions of the polyanionic compound comprise PO₄³⁻ and P₂O₇⁴⁻, a molar ratio of P₂O₇⁴⁻ to PO₄³⁻ in the polyanionic compound is 0.1 to 5, and preferably, the molar ratio of P₂O₇⁴ to PO₄³⁻ in the polyanionic compound is 0.1 to 3.

6. The positive electrode plate according to any one of claims 1 to 5, wherein the positive electrode active material layer further comprises a sodium supplement additive, a mass fraction of the positive electrode active material in the positive electrode active material layer is 50wt% to 98wt%, and a mass fraction of the sodium supplement additive in the positive electrode active material layer is 2wt% to 50wt%.

7. The positive electrode plate according to claim 6, wherein the sodium supplement additive comprises at least one of Na₂S, NaN₃, Na₂NiO₂, NaC₆H₅O₇, Na₂O, Na₂O₂, Na₆CoO₄, Na₅FeO₄, Na₂C₂O₄, Na₂C₄O₄, Na₂C₃O₅, Na₂C₄O₆, and Na₂C₆O₆.

8. The positive electrode plate according to any one of claims 1 to 7, wherein a thickness of the negative electrode plate satisfies that dₘₐₓ/dₘᵢₙ is 100% to 700%, wherein dₘₐₓ is a thickness of the negative electrode plate of the battery at 100% SOC, and dₘᵢₙ is a thickness of the negative electrode plate of the battery at 0% SOC.

9. A preparation method of the positive electrode plate according to any one of claims 1 to 8, comprising:
providing a positive electrode current collector; and
providing a positive electrode slurry, and applying the positive electrode slurry on a surface of at least one side of the positive electrode current collector, to form a positive electrode active material layer.

10. The method according to claim 9, wherein the providing a positive electrode slurry comprises: uniformly mixing a positive electrode active material with a sodium supplement additive in a solvent; and after the positive electrode active material layer is formed, the method further comprises: assembling the positive electrode plate and a negative electrode plate into a battery, and performing formation.

11. The method according to claim 9 or 10, wherein before the applying the positive electrode slurry on a surface of at least one side of the positive electrode current collector, the method further comprises: providing a sodium foil on the surface of the positive electrode current collector on which the positive electrode slurry is applied.

12. A battery, comprising a positive electrode plate, a negative electrode plate, and a separator between the positive electrode plate and the negative electrode plate, wherein the positive electrode plate is the positive electrode plate according to any one of claims 1 to 8 and/or a positive electrode plate prepared using the method according to any one of claims 9 to 11; and
the negative electrode plate comprises a negative electrode current collector, and a thickness of the negative electrode plate satisfies that dₘₐₓ/dₘᵢₙ is 100% to 700%, wherein dₘₐₓ is a thickness of the negative electrode plate of the battery at 100% SOC, and dₘᵢₙ is a thickness of the negative electrode plate of the battery at 0% SOC.

13. An electric apparatus, comprising the positive electrode plate according to any one of claims 1 to 8, and/or a positive electrode plate prepared using the method according to any one of claims 9 to 11, and/or the battery according to claim 12.
